# EUROPEAN PATENT APPLICATION

(11) **EP 1 510 157 A1**
(43) Date of publication of application: **02.03.2005**
(21) Application number: 03425567.9
(22) Date of filing: 01.09.2003
(51) Int. Cl.: A47F 3/00

(54) **Display showcase with improved opening device**

(71) Applicant: Goppion S.r.l., 20090 Trezzano sul Naviglio (MI) (IT)
(72) Inventor: Goppion, Alessandro, 20144 Milano (IT)
(74) Representative: Checcacci, Giorgio

(57) **Abstract**

Display showcase comprising a base (1) for a bell-jar, a bell-jar (2), suitable for defining, together with the base, a display space (3) with respect to an external environment, an opening device for the showcase by vertical translation of the bell-jar with respect to the base. The opening device comprises at least two lifting groups (4), each comprising at least three coaxial telescopic elements actuated through a screw mechanism.

## Description

The present invention refers to a showcase, in particular a display showcase for museums.

Such showcases mainly carry out the task of preserving the objects displayed in a museum, often antique and of substantial value, isolating them from the external environment and at the same time ensuring their visual availability to visitors. Such showcases must therefore define a display space in which the displayed objects are protected and conserved, often under a controlled microclimate (humidity level, presence of polluting dusts and gases, etc.).

As far as the structure is concerned, a display showcase shall, overall, be such as to allow as greater visibility as possible of the objects therein, and such as to show off the display. Such a structure shall also foresee the presence of an opening device for the showcase, which allows access to the objects displayed inside of it.

Opening devices must meet some main requirements. A first requirement is that of adapting to particular display restrictions, which may derive both from the type and size of the objects to be displayed and from the showcase arrangement within the museum space. A second requirement, particularly important for museum curators and administrators, is that such opening devices are as simple as possible, so as not to require the intervention of third parties for opening/closing operations, and as reliable as possible, so that the probability of failure is minimal, in any case without the risk of damaging the objects on display.

To deal with these requirements various opening devices and mechanisms for museum showcases have been developed; in particular opening devices are known which foresee the vertical translation of the bell-jar which protects the objects on display with respect to a base, on which such a bell-jar rests.

The underlying technical problem of the present invention is to provide a display showcase with an opening device of the vertical translation type, which has a simple and reliable operation and also allows for wide accessibility when the showcase is open for interventions on the organisation of the objects on display.

Therefore, the present invention concerns a display showcase comprising: a base for a bell-jar, a bell-jar, suitable for defining, together with said base, a display space with respect to an external environment, an opening device for said showcase by vertical translation of said bell-jar with respect to said base, characterised in that said opening device comprises at least two lifting groups, each comprising at least three coaxial telescopic elements actuated through a worm screw mechanism.

Thanks to the use of a worm screw mechanism, which is particularly simple, the opening/closing operations of the showcase are easy to carry out and the opening device is, overall, reliable and robust. The use of telescopic lifting groups also gives the opening device high flexibility and allows, based upon the number or length of the telescopic elements included within the lifting groups, even substantial elevations of the bell-jar with respect to the base and therefore wide accessibility when the showcase is open.

Preferably, said at least three telescopic elements comprise a first threaded coupling between at least one portion of inner surface of a first telescopic element and the outer surface of a second telescopic element, said second telescopic element being movable inside said first telescopic element, and a second threaded coupling between at least one portion of inner surface of said second telescopic element and the outer surface of a third telescopic element, said third telescopic element being movable inside said second telescopic element. The use of threaded couplings thus arranged allows to make a telescopic worm screw mechanism that is constructively simple and of reduced overall size.

Said first and second threaded coupling preferably have the same pitch. This ensures that, when said worm screw mechanism is actuated, said at least two lifting groups carry out exactly the same vertical displacements, once such groups are actuated synchronously, as described later on. This characteristic is extremely advantageous, since it allows said bell-jar to always remain parallel to the plane of said base during the opening/closing of the showcase, avoiding blocking up or jamming of the opening device.

According to a first preferred embodiment, said at least one portion of inner surface of said first telescopic element comprises a threading integrally formed on said first telescopic element. This aspect allows particularly simple realisation, in terms of mechanical working, of said first telescopic element.

More preferably, said at least one portion of inner surface of said second telescopic element also comprises a threading integrally formed on said second telescopic element. In this way, the second telescopic element is also realised with particularly simple mechanical working. Moreover, in this embodiment both the inner and the outer threadings are integrally formed with said at least three telescopic elements. This aspect advantageously makes the manufacture of such elements faster and more cost-effective.

According to another preferred embodiment, said at least one portion of inner surface of said first telescopic element comprises at least one nut screw mounted inside said first telescopic element. In this embodiment, the threading of said at least one portion of inner surface of said first telescopic element is advantageously formed on a separate element, which can thus even be removed and replaced, and can also be made of a different material with respect to that of said first telescopic element.

More preferably, said at least one portion of inner surface of said second telescopic element also comprises at least one nut screw mounted inside said second telescopic element. In this way the threading of said at least one portion of inner surface of said second telescopic element is also formed on a separate element, with advantages similar to those outlined above for the first telescopic element. Moreover, all of the inner threadings can be provided on separate elements, with advantages in the working of said at least three telescopic elements.

Preferably, said nut screw is mounted inside said first or said second telescopic element at an end thereof. This advantageously allows the maximum of the available stroke for said second and third telescopic element to be used.

Moreover, in a first embodiment, said nut screw is force-fitted. Assembly, in this embodiment, is particularly quick and simple to realise and does not require the use of further locking means.

In a second embodiment, said nut screw is preferably kept in position through locking means. In this case the assembly can be with clearance and therefore be realised effortlessly, advantageously avoiding radial deformations which could be caused by force-fitting , with potential malfunction of the threaded couplings. This characteristic also makes the possible removal or replacement of said nut screw easier.

Preferably, said locking means comprise at least one ridge formed on the outer surface of said nut screw, suitable for engaging in at least one notch formed on said at least one portion of inner surface of said first or said second telescopic element, and at least one elastic ring mounted above said nut screw. Advantageously, said means counter both rotation of said nut screw and possible sliding out from its seat; moreover, since they are non-permanent, they easily allow the removal or replacement of said nut screw.

Said nut screw is preferably made from a self-lubricating material, such as, for example, bronze, PVC, nylon, turcite, ferrozell. The use of such materials advantageously allows to avoid or reduce the use of lubrication for said first and second threaded coupling.

At least one slide block having sliding contact with the inner surface of said first telescopic element is preferably associated with said second telescopic element. Such a slide block has the function of guiding said second telescopic element in said first telescopic element, limiting possible misalignments, which are harmful to the correct operation of the opening device, when said second telescopic element is drawn out with respect to said first telescopic element. Said slide block also constitutes an end stop ridge, suitable for preventing the sliding out of said second telescopic element from said first telescopic element whilst the worm screw mechanism is actuated.

At least one slide block having sliding contact with the inner surface of said second telescopic element, suitable for guiding said third telescopic element in said second telescopic element, is preferably associated with said third telescopic element. Such a slide block has the function of guiding said second telescopic element in said third telescopic element, limiting further possible misalignments, which are harmful to the correct operation of the opening device, when said third telescopic element is drawn out with respect to said second telescopic element. Said slide block also constitutes an end stop ridge, suitable for preventing the sliding out of said third telescopic element from said second telescopic element during the actuation of the worm screw mechanism.

Preferably, said at least two lifting groups comprise a plurality of telescopic protective jackets for said at least three telescopic elements. Besides improving the aesthetic appeal, such jackets advantageously can be used to isolate said telescopic elements with respect to the display space, avoiding that possible dusts or lubricants from these come into the display environment, with the possibility of damage to the objects on display.

Preferably said plurality of telescopic protective jackets is pulled by said at least three telescopic elements during their motion. Therefore, the introduction of a further actuation device for just the jackets is advantageously avoided, and their motion is authomatically synchronised with that of said telescopic elements.

According to a preferred embodiment of the invention, said at least two lifting groups comprise a rest housing seat associated with said base. This solution advantageously allows the bell-jar to be kept free of structures which would reduce visibility.

According to another embodiment, said at least two lifting groups comprise a housing seat at rest associated with said bell-jar. This solution is advantageous when the base must have a low thickness, such as not to be able to receive said housings.

Preferably, the showcase of the present invention also comprises synchronisation means of the motion of said at least two lifting groups. This advantageously allows said at least two lifting groups to carry out exactly the same vertical displacements when the worm screw mechanism is actuated.

In a preferred embodiment, said synchronisation means comprise a chain drive between a drive device and said at least two lifting groups. Such a solution is simple to realise and makes the showcase opening device particularly reliable overall, since both the operation of said at least two lifting groups and the transmission are purely mechanical.

In another embodiment, said synchronisation means comprise at least one electrically controlled stepping motor associated with each of said at least two lifting groups. This solution is advantageous when it is not possible to realise a mechanical transmission between said at least two lifting groups.

Further characteristics and advantages of the present invention shall become clearer from the following detailed description of some preferred embodiments thereof, given with reference to the attached drawings. In such drawings,
- figures 1 and 1a are perspective views of a display showcase according to a first example embodiment of the invention, in two different operating configurations;
- figures 2 and 2a are side views of the showcase of figure 1 and 1a respectively;
- figure 3 is a cross section of a rest housing seat of one of the lifting groups and of the group housed in such a seat, in a first operating configuration;
- figure 4 is a cross section of the lifting group of figure 3 in a second operating configuration;
- figure 5 is a perspective view of the telescopic elements of the lifting group of figure 4;
- figure 5a is a perspective section view of the telescopic elements of figure 5;
- figures 5b and 5c are enlarged perspective section views of two details of the telescopic elements of figure 5a;
- figure 6 is an enlarged perspective section view of a detail of figure 5b;
- figure 7 is an enlarged perspective view of a detail of figure 5c;
- figure 8 is a schematic side view, staggered and with parts partially removed, of a display showcase according to a second example embodiment of the invention, in two different operating configurations;
- figure 9 is an enlarged section view of a detail of the showcase of figure 8.

A display showcase according to the present invention essentially comprises a base 1 and a bell-jar 2, suitable for defining, together with such a base, a display space 3. Such a showcase is also provided with an opening device comprising at least two lifting groups 4, suitable for allowing the opening of the showcase by vertical translation of the bell-jar 2 with respect to the base 1. In the display space 3, and at the display plane 6, it is possible to provide levels 7, supports or other similar means, helping for the presentation of the objects on display.

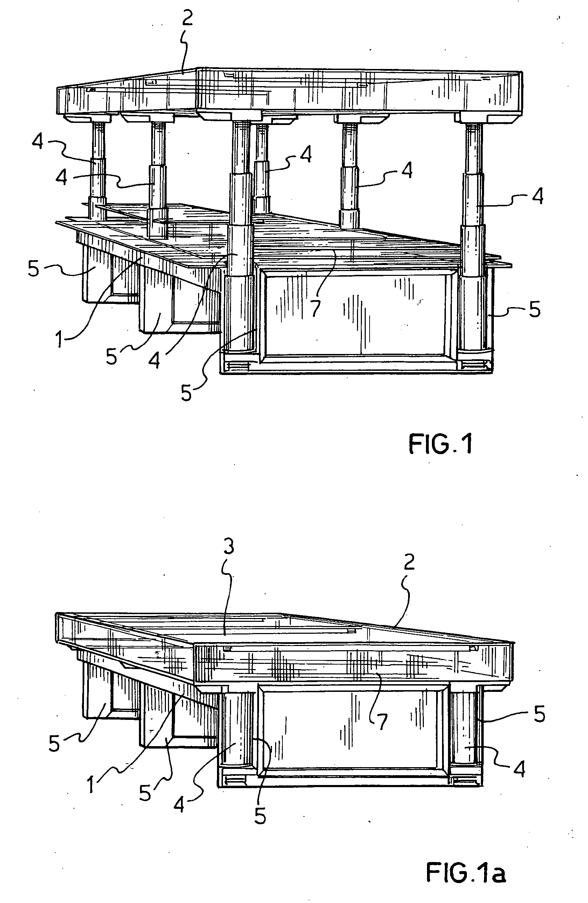

An embodiment of such a showcase is shown in figures 1 and 1a, which respectively show a first operating configuration, corresponding to the showcase open, and a second operating configuration, corresponding to the showcase closed. In such an embodiment an opening device is used comprising six lifting groups 4, the housing seats 5 of which are associated with the base 1. The number of lifting groups can vary according to the size of the showcase: the larger the surface of the base 1, the greater the number of lifting groups 4 shall preferably be. In other embodiments of the present invention (not shown) two or four lifting groups can, for example, be used (for showcases with small sized bases), or else eight or more lifting groups can be used (for showcases with large sized bases). Preferably, moreover, the lifting groups operate at the perimeter of the base 1.

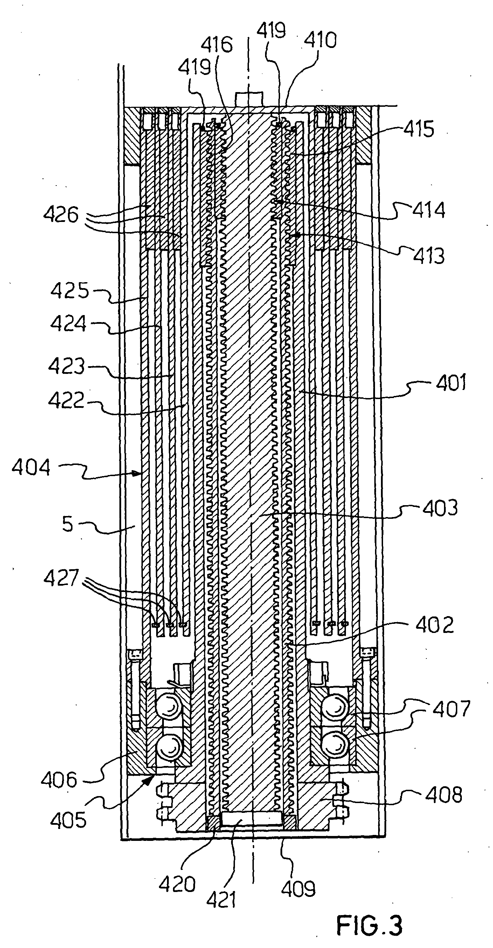

In a first embodiment (figure 3), the lifting groups 4 comprise a first telescopic element 401, a second telescopic element 402 and a third telescopic element 403, coaxial to each other, a plurality of telescopic protective jackets 404 for said telescopic elements and a drive group 405.

The aforementioned plurality of telescopic protective jackets 404 comprises a number of jacket elements 422, 423, 424 and 425 preferably greater than the number of telescopic elements, so that, despite their shorter length (due to bulk constraints at rest in the housing seat 5), they can cover all of the telescopic elements, even when they are completely extended. With the exception of the innermost element 422, each jacket element has associated therewith, at an end thereof, sealing rings 426. Such sealing rings also constitute an abutment for end stop ridges 427 and allow each jacket element to be pulled under the action of the one immediately below. The innermost jacket element 422 is pulled directly by the telescopic elements 401, 402, 403, in particular by the third element 403.

The drive group 405 comprises: a support 406 integral with the walls of the housing seat 5, two thrust bearings 407, operatively placed between the support 406 and the first telescopic element 401, and a double-toothed sprocket 408, integrally associated with the first telescopic element 401.

The drive group 405 is positioned at a lower end 409 of the housing seat 5, the end being opposite the one at which the telescopic elements 401, 402 and 403 protrude from the housing seat 5. This embodiment advantageously allows to provide a zone above the drive group 405 to be formed within the housing seat 5, to house the aforementioned plurality of jackets 404; on the other hand, it requires that a chain drive (not shown in the figures) to synchronise the motion of the lifting groups 4 be situated at the lower ends 409 of the housing seats 5. This can involve greater complexity for the chain drive system, depending on the particular shape that the base 1 takes up at a floor.

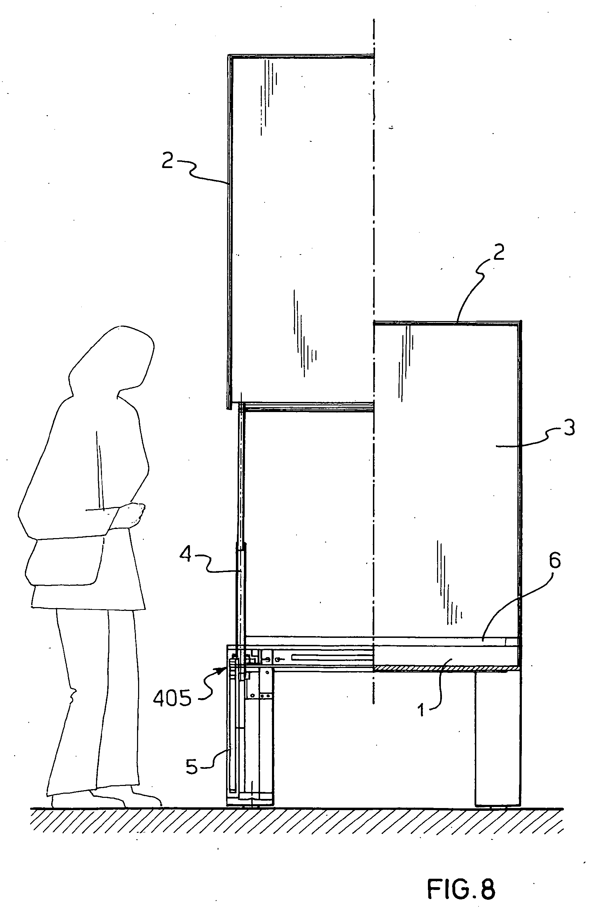

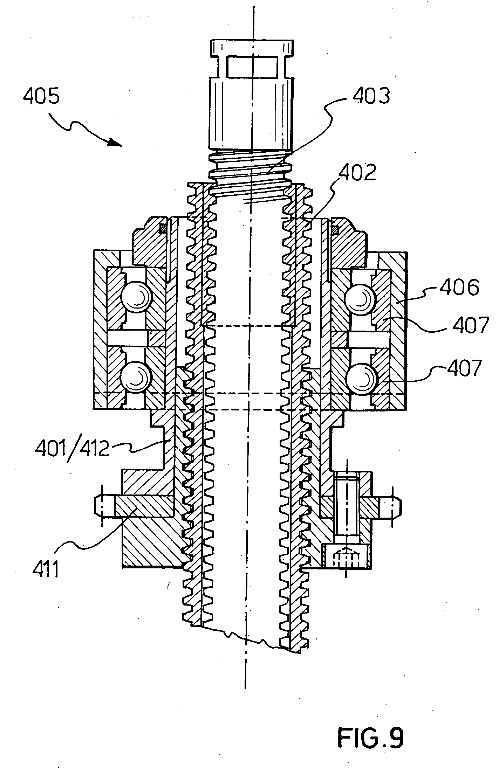

In a different embodiment (figure 8 and 9), the drive group 405 is, instead, placed at an upper end 410 of the housing seat 5, the end at which the telescopic elements 401, 402 and 403 protrude from the housing seat 5. This solution allows a chain drive between the lifting groups 4 to be provided in a simple manner in the zone of the base 1 immediately below the display plane 6; on the other hand, it does not allow the plurality of jackets 404 (figure 8) to be housed in the housing seats 5. In such an embodiment the drive group 405 comprises: a support 406 integral with the walls of the housing seat 5, two thrust bearings 407, operatively placed between the support 406 and the first telescopic element 401, and a sprocket 411, integrally associated with the first telescopic element 401. Such an element comprises, in this case, a sleeve with a suitable diameter and a length substantially equal to that of the drive group 405 (figure 9).

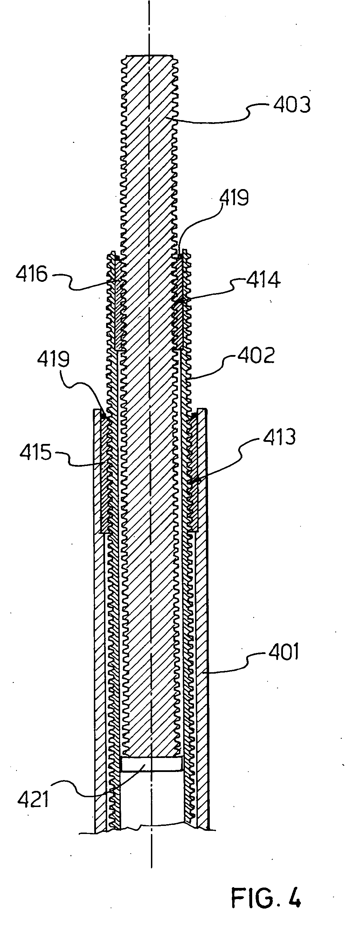

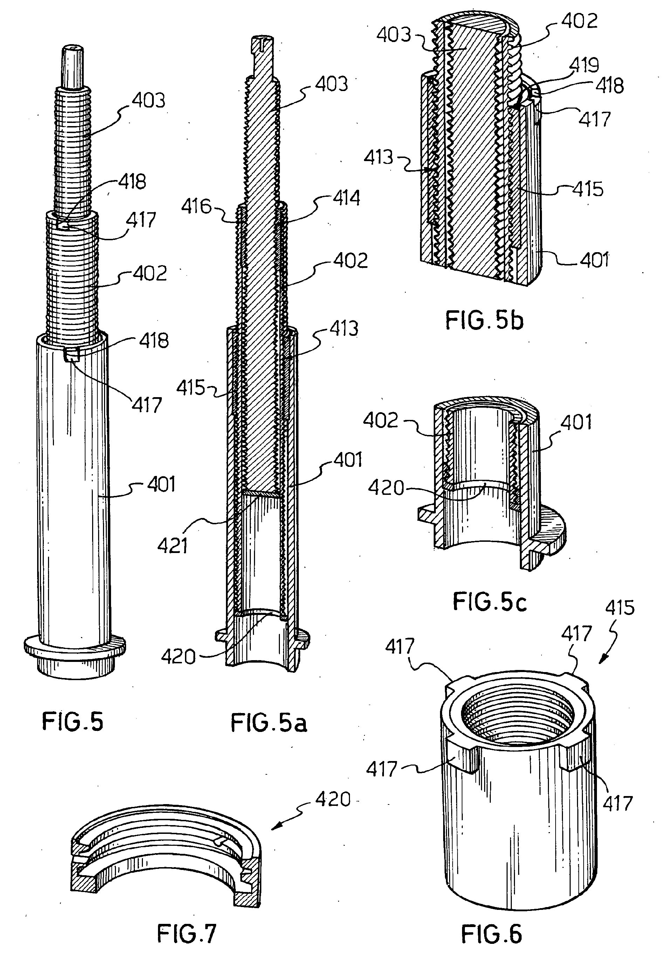

The telescopic elements (figure 4, 5 and 5a) comprise a first threaded coupling 413 and a second threaded coupling 414, which advantageously have the same pitch. The first threaded coupling is realised between the outer surface of the second telescopic element 402 and a first nut screw 415, mounted inside the first telescopic element 401 at an end thereof. The second threaded coupling is realised between the outer surface of the third telescopic element 403 and a second nut screw 416, mounted inside the second telescopic element 402 at an end thereof.

Such nut screws are mounted with clearance and kept in position on the telescopic elements 401 and 402 through locking means (figure 5 and 5b). Such means comprise at least one ridge 417 suitable for engaging in at least one corresponding notch 418 formed at an end of the first and second telescopic element 401 and 402, having the purpose of preventing the rotation of the nut screws in the telescopic elements when the worm screw mechanism is actuated. In the embodiments presented here such ridges and the corresponding notches are preferably four in number (figure 6); this advantageously allows a better distribution of the tangential stresses between nut screw and telescopic element. The aforementioned locking means also comprise at least one elastic ring 419 mounted above each nut screw 415 and 416 and suitable for preventing the slipping out of the latter from its seat due to the axial forces, arising with the actuation of the worm screw mechanism. Beside the use of said locking means, it is possible, if necessary to further ensure the correct positioning of the nut screws, to make use of locking through gluing.

Slide blocks 420 and 421 are associated with the second and third telescopic element 402 and 403 (figure 3, 5a, 5c and 7). They keep sliding contact with a portion of inner surface of the first and second telescopic element 401 and 402 respectively and guide the movement of the elements 402 and 403 inside the elements 401 and 402 respectively, avoiding in particular misalignment between the elements when these are in highly extended configurations. Such slide blocks also constitute an end stop ridge suitable for preventing the accidental slipping out of the second telescopic element 402 from the first 401, or else of the third telescopic element 403 from the second 402, whilst the worm screw mechanism is actuated.

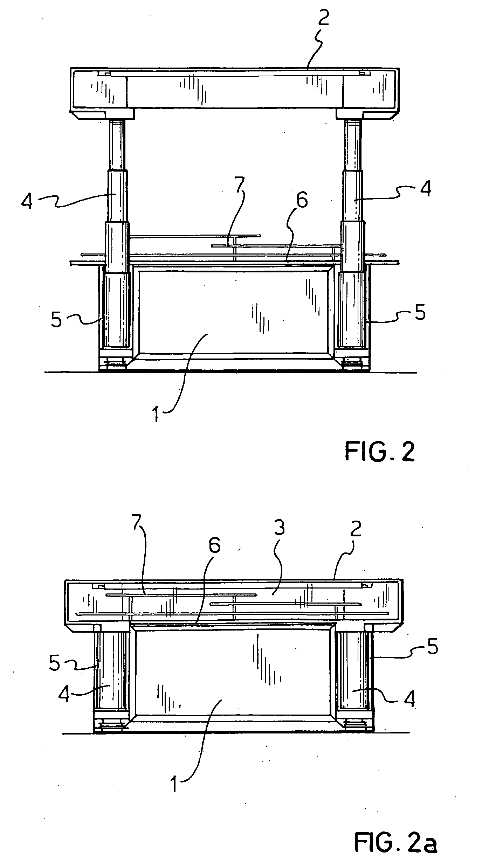

A display showcase carries out its functions usually in a first operating configuration, in which it is closed (figure 1a, 2a and 8 on the right hand side). To open it and pass to a second operating configuration (figure 1, 2 and 8 on the left hand side), the museum curators or administrators act upon a drive device (not shown in the figures). Through a chain drive (not shown in the figures) the motion is synchronously transmitted to each lifting group 4. The rotary motion given by the chain drive to the sprocket 408 or 411, and thus to the first telescopic element 401 integral with it, is transformed into vertical translational motion of the telescopic elements by means of the worm screw mechanism.

In particular, first of all, just the first telescopic element 401 rotates, whereas the second element 402 and, with it, the third element 403, translate vertically through the effect of the first threaded coupling 413. When the second telescopic element 402 reaches the end stop, it constitutes a single element with the first telescopic element 401 and therefore is subjected to the same rotary motion. Such motion actuates the second threaded coupling 414 making the third telescopic element 403 translate vertically, until it also reaches the end stop. In this condition the lifting groups 4 have the maximum vertical extension and the showcase is in said second operating configuration, i.e. is open, with the bell-jar 2 completely raised.

In the embodiment provided with lifting groups equipped with a jacket (figures 1, 2 and 3), the translational motion of the second and third telescopic element 402 and 403 also pulls the innermost jacket element 422. This, in turn, having finished its stroke, pulls the immediately adjacent jacket elements in succession, so that the telescopic elements always remain covered during their extension.

The closing of the showcase takes place by actuating the drive device so as to make the sprocket 408 or 411 of each lifting group 4 rotate in the opposite direction with respect to the previous one. Through the action of the first threaded coupling 413, the second telescopic element 402 withdraws in the first telescopic element 401 which is rotating. When it is completely withdrawn, it forms a single element with the first telescopic element 401 and starts to rotate with it, actuating the second threaded coupling 414 and therefore also making the third telescopic element 403 withdraw. When the showcase is closed, the three telescopic elements 401, 402 and 403 are completely housed in the housing seat 5 (figure 3).

## Claims

1. A display showcase comprising: a base for a bell-jar (1), a bell-jar (2), suitable for defining, together with said base, a display space (3) with respect to an external environment, an opening device for said showcase by vertical translation of said bell-jar with respect to said base, **characterised in that** said opening device comprises at least two lifting groups (4), each comprising at least three coaxial telescopic elements (401, 402, 403) actuated through a worm screw mechanism.

2. A showcase according to claim 1, wherein said at least three telescopic elements (401, 402, 403) comprise a first threaded coupling (413) between at least one portion of inner surface of a first telescopic element (401) and the outer surface of a second telescopic element (402), said second telescopic element (402) being movable inside said first telescopic element (401), and a second threaded coupling (414) between at least one portion of inner surface of said second telescopic element (402) and the outer surface of a third telescopic element (403), said third telescopic element (403) being movable inside said second telescopic element (402).

3. A showcase according to claim 2, wherein said first and second threaded coupling (413, 414) have the same pitch.

4. A showcase according to claim 2, wherein said at least one portion of inner surface of said first telescopic element (401) comprises a threading integrally formed on said first telescopic element (401).

5. A showcase according to claim 2, wherein said at least one portion of inner surface of said second telescopic element (402) comprises a threading integrally formed on said second telescopic element (402).

6. A showcase according to claim 2, wherein said at least one portion of inner surface of said first telescopic element (401) comprises at least one nut screw (415) mounted inside said first telescopic element (401).

7. A showcase according to claim 2, wherein said at least one portion of inner surface of said second telescopic element (402) comprises at least one nut screw (416) mounted inside said second telescopic element (402).

8. A showcase according to claim 5 or 6, wherein said nut screw (415, 416) is mounted inside said first (401) or said second (402) telescopic element at an end thereof.

9. A showcase according to claim 5 or 6, wherein said nut screw (415, 416) is force-fitted.

10. A showcase according to claim 5 or 6, wherein said nut screw (415, 416) is kept in position through locking means.

11. A showcase according to claim 9, in cui said locking means comprise at least one ridge (417) formed on the outer surface of said nut screw (415, 416), suitable for engaging in at least one notch (418) formed on said at least one portion of inner surface of said first (401) or said second (402) telescopic element, and at least one elastic ring (419) mounted above said nut screw (415, 416).

12. A showcase according to claim 5 or 6, wherein said nut screw (415, 416) is made from a self-lubricating material.

13. A showcase according to any one of claims 2 to 11, wherein at least one slide block (420) having sliding contact with the inner surface of said first telescopic element (401), suitable for guiding said second telescopic element (402) inside said first telescopic element (401), is associated with said second telescopic element (402).

14. A showcase according to claim 12, wherein at least one slide block (421) having sliding contact with the inner surface of said second telescopic element (402), suitable for guiding said third telescopic element (403) inside said second telescopic element (402), is associated with said third telescopic element (403).

15. A showcase according to any one of the previous claims, wherein said at least two lifting groups (4) comprise a plurality of telescopic protective jackets (404) for said at least three telescopic elements (401, 402, 403).

16. A showcase according to claim 14, wherein said plurality of telescopic protective jackets (404) is pulled by said at least three telescopic elements (401, 402, 403) during their motion.

17. A showcase according to any one of the previous claims, wherein said at least two lifting groups (4) comprise a rest housing seat (5) associated with said base (1).

18. A showcase according to any one of the previous claims, wherein said at least two lifting groups (4) comprise a rest housing seat (5) associated with said bell-jar (2).

19. A showcase according to any one of the previous claims, comprising synchronisation means of the motion of said at least two lifting groups (4).

20. A showcase according to claim 18, wherein said synchronisation means comprise a chain drive between a drive device and said at least two lifting groups (4).

21. A showcase according to claim 18, wherein said synchronisation means comprise at least one electrically controlled stepping motor associated with each of said at least two lifting groups (4).
